# EUROPEAN PATENT SPECIFICATION

(11) **EP 1 410 968 B1**
(45) Date of publication and mention of the grant of the patent: **15.06.2005**
(21) Application number: 03020548.8
(22) Date of filing: 17.09.2003
(51) Int. Cl.: B60T 11/26

(54) **Reservoir**
Behälter
Reservoir

(30) Priority: 20.09.2002 JP 2002274897
(43) Date of publication of application: 21.04.2004
(73) Proprietor: NISSIN KOGYO CO., LTD., Ueda-shi, Nagano-ken (JP)
(72) Inventor: Kanai, Atsushi, Nissin Kogyo Co., Ltd., Nagano-ken 389-0514 (JP)
(74) Representative: HOFFMANN - EITLE

(56) References cited:
- FR-A- 2 473 971
- US-A- 3 744 513
- US-A- 4 805 668

## Description

### Background of the Invention

### 1. Field of the Invention

The present invention relates to a reservoir for storing operation fluid which is used in a fluid pressure master cylinder for a vehicle used for a brake or a clutch for an automobile or a motorcycle etc., and more in detail relates to the configuration of the reservoir in which the operation fluid satisfactorily can be filled.

### 2. Description of the Related Art

For example, the reservoir for the fluid pressure master cylinder which operates the brake of an automobile by the pressurized fluid is arranged in a manner that a fluid inlet port is provided at the upper wall of a reservoir main body and a fluid supply port communicating with the fluid pressure master cylinder is provided at the lower portion thereof, a filter is disposed on the entire surface of the fluid storage chamber within the reservoir main body, whereby dust mixed within the operation fluid is filtered by the filter and the operation fluid is supplied to the fluid pressure master cylinder from a supply port.

The reservoir main body is configured by an upper half body having the fluid inlet port and a lower half body having the fluid supply port. The upper and lower half bodies are made from synthetic resin material and formed by using molds. A filter is sandwiched between the conjunction surfaces of the upper and lower half bodies and then subjected to the heat fusion processing. Thus, since the filter is integrally molded with the reservoir main body simultaneously with the forming of the reservoir main body, the assembling processing of the filter can be eliminated, so that the productivity and the economical efficiency can be improved (for example, see JP-UMA-2-10174 (page 1 and Fig. 1)).

The reservoir thus configured is coupled to a brake and a clutch by using a fluid pressure pipe arrangement together with the fluid pressure master cylinder to constitute a fluid pressure system from the reservoir to the brake or the clutch. The operation fluid is supplied to the fluid pressure systems from the fluid inlet port of the reservoir. The operation fluid is supplied through such a pressurizing sending operation that the operation fluid is pressurized by a pressurizing sending device thereby to fill the fluid in a short time. However, the operation fluid sent with pressure to the fluid inlet port collides with the mesh of the filter to cause a surface tension. Further, since the air at the lower side than the filter is prevented from moving upward through the filter, the operation liquid is supplied in a limited manner and so the degradation of the workability is caused.

Thus, at the time of pressurizing and sending the operation fluid, it is desired to temporarily detach the filter within the fluid storage chamber. However, as described above, since the filter is integrally molded with the reservoir main body by giving the priority to the productivity and the economical efficiency, the filter can not be detached from the reservoir main body and so the operation requiring a long time is obliged.

FR 247 397 discloses a reservoir with a fluid chamber and with an inlet port provided at his upper portion.

### Summary of the Invention

The invention was made in view of the aforesaid circumstances and an obj ect of the invention is to provide a reservoir, especially for a fluid pressure master cylinder for a vehicle, in which a filter is integrally molded with a reservoir main body thereby to intend to improve productivity and economical efficiency and also operation fluid is filled satisfactorily in a short time through pressuring and sending operation.

According to the aforesaid obj ect, the invention is a reservoir in which a fluid inlet port is provided at an upper portion of a reservoir main body having a fluid storage chamber therein, a fluid supply port is provided at a lower portion of the reservoir main body, and a filter is integrally molded with an inner portion of the reservoir main body, characterized in that a fluid induction tube is provided downward within the fluid storage chamber, an upper opening of the fluid induction tube constitutes the fluid inlet port, the filter is disposed at an inside of a lower portion of the fluid induction tube, a vent port for communicating the fluid storage chamber with an inner portion of the fluid induction tube is provided at a side wall of the fluid induction tube at a portion upper than the filter, and the vent port is disposed at a position higher than an upper limit level of a fluid surface.

In the reservoir of the invention, the reservoir may be a reservoir for a fluid pressure master cylinder for a vehicle.

In the reservoir for a fluid pressure master cylinder for a vehicle of the invention, the fluid supply port may communicates with the fluid pressure master cylinder.

In the reservoir for a fluid pressure master cylinder for a vehicle of the invention, a plurality of the fluid supply port may be provided at the lower portion of the reservoir main body and the fluid pressure master cylinder may have multi systems.

In the reservoir for a fluid pressure master cylinder for a vehicle of the invention, a plurality of the fluid supply port may be provided at the lower portion of the reservoir main body to communicate with a plurality of the fluid pressure master cylinder.

### Brief Description of the Drawings

Fig. 1 is a partially sectional front view of a reservoir showing an embodiment of the invention;
Fig. 2 is a front view of Fig. 1;
Fig. 3 is a sectional view along a line III-III in Fig. 2; and
Fig. 4 is a sectional view along a line IV-IV in Fig. 2.

### Detailed Description of the Invention

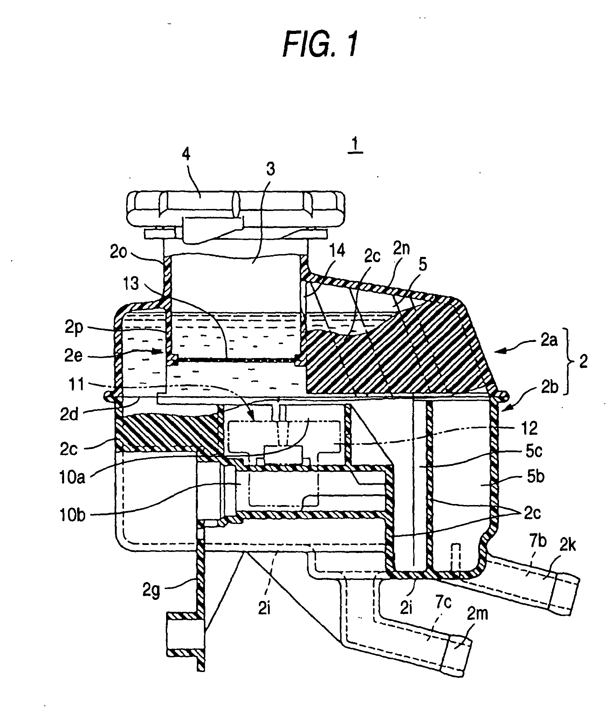

The embodiment in which the invention is applied to a fluid pressure master cylinder for an automobile will be explained with reference to the accompanying drawings in Figs. 1 to 4.

A reservoir 1 is formed by a reservoir main body 2 and a cap 4 to be attached to the fluid inlet port 3 of the reservoir main body 2. The system is a three system type used for both a brake and a clutch in which operation fluid stored in the reservoir main body 2 is supplied to a two-system tandem type fluid pressure master cylinder for a brake (not shown) and a single type fluid pressure master cylinder for a clutch (not shown). The inner portion of the reservoir main body 2 constitutes a fluid storage chamber 5. The fluid storage chamber 5 is partitioned into three partitioned fluid storage chambers 5a, 5b and 5c by means of a plurality of partition walls 2c.

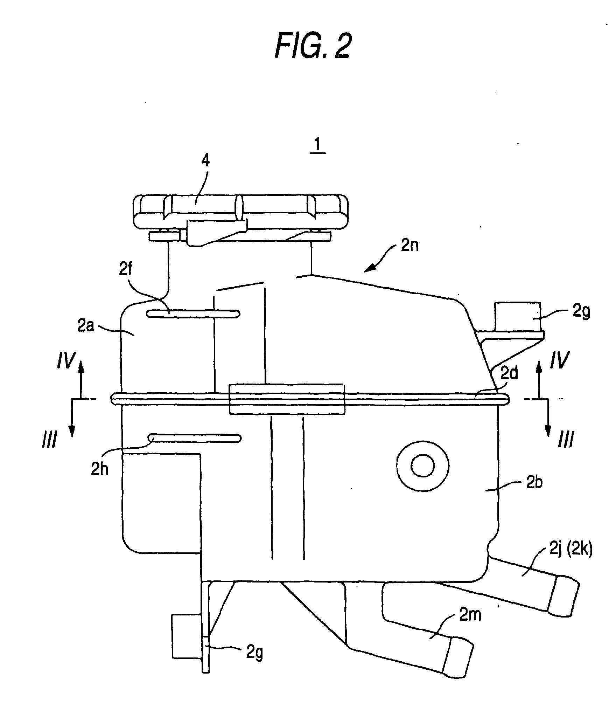

In the reservoir main body 2, an upper half 2a and a lower half 2b are made from synthetic resin material and formed by using molds, and integrally formed by subjecting the conjunction surfaces 2d thereof to a heat fusion processing. The upper half 2a is arranged in a manner that a fluid induction tube 2e is provided within the upper half 2a together with the partition walls 2c, and an upper limit level gauge 2f and a vehicle body attachment bracket 2g for attaching to a vehicle body are provided at the side surface of the outside of the upper half 2a. The lower half 2b is arranged in a manner that the partition walls 2c is provided within the lower half 2b, a lower limit level gauge 2h and the vehicle body attachment bracket 2g for attaching to a vehicle body are provided at the side surface of the outside of the lower half 2b, and further fluid supply tubes 2j, 2k, 2m (Fig.2) and the vehicle body attachment bracket 2g for attaching to the vehicle body are protrusively provided at a bottom wall 2i of the lower half 2b.

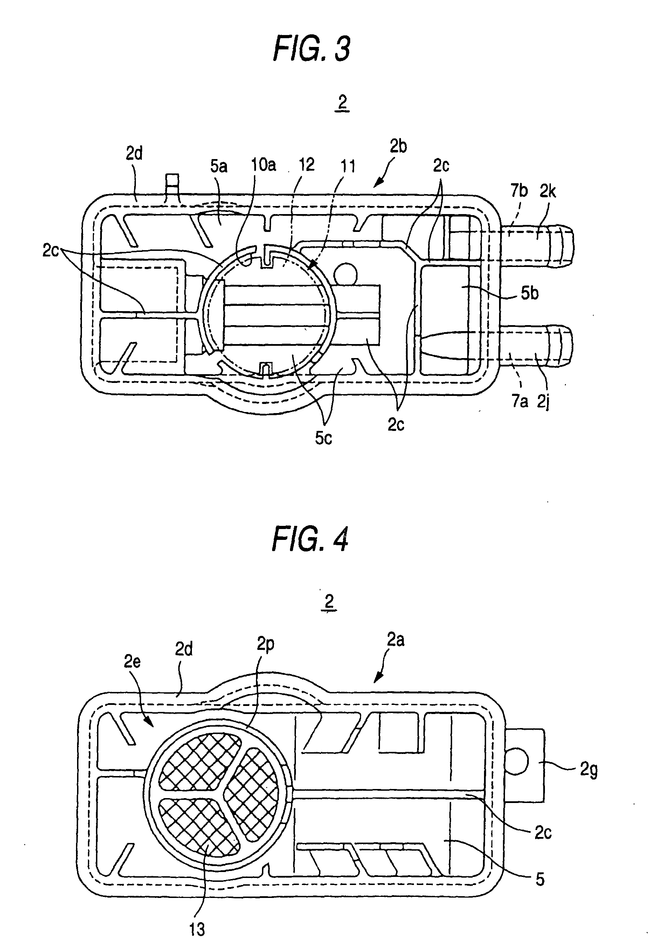

Fluid supply ports 7a, 7b, 7c (Figs. 1 and 3) are provided within the fluid supply tubes 2j, 2k, 2m so as to communicate with the partitioned fluid storage chambers 5a, 5b, 5c so that the operation fluid stored in the partitioned fluid storage chambers 5a, 5b, 5c is supplied to the fluid pressure master cylinder through the fluid supply ports 7a, 7b, 7c, respectively.

At the almost center portion within the lower half 2b, two separated chambers 10a, 10b are formed by using the partition walls 2c. The float 12 with a magnet of the fluid surface level detection device 11 is housed within the upper side separated chamber 10a so as to move in a vertical direction. Further, the lead switch (not shown) of the fluid surface level detection device 11 is housed within the lower side separated chamber 10b.

The fluid induction tube 2e is a cylindrical body which is provided at the upper wall 2n of the reservoir main body 2 so as to protrude in the upper and lower directions from the upper wall 2n. A portion protruding upward from the upper wall 2n constitutes a fluid inlet tubular portion 2o, a portion extending downward within the fluid storage chamber 5 from the upper wall 2n constitutes a main body tubular portion 2p, and the inner opening of the fluid inlet tubular portion 2o constitutes the fluid inlet port 3. The main body tubular portion 2p is arranged in a manner that a meshed filter 13 (Figs. 1 and 4) is provided so as to cover the entire inner surface at the lower end thereof which is positioned between the upper limit level gauge 2f and the lower limit level gauge 2h, and a vent port 14 is provided at the side wall between the filter 13 and the upper wall 2n of the reservoir main body 2 so as to communicate the fluid storage chamber 5 with the inner portion of the fluid induction tube 2e.

The filter 13 is integrally molded through the heat fusion processing at the time of forming the mold of the upper half 2a. Thus, since the assembling process of the filter itself can be eliminated, productivity and economic efficiency can be improved. The vent port 14 is provided at the upper side than the upper limit level gauge 2f so that the vent port 14 is entirely exposed at the upper side than the fluid surface even when the operation fluid is filled to the upper limit level gauge 2f. Thus, only the air within at the upper portion of the fluid storage chamber 5 communicates with the vent port 14 but the operation fluid does not communicate with the vent port 14, so that entirety of the operation fluid supplied from the fluid inlet port 3 to the fluid induction tube 2e is filtered by the filter 13 and then flown into the fluid storage chamber 5.

The reservoir 1 configured in the aforesaidmanner is disposed within the engine room of an automobile together with the fluid pressure master cylinder for the brake and the fluid pressure master cylinder for the clutch and is coupled to the brake or the clutch through the fluid pressure pipe arrangement thereby to constitute the fluid pressure system from the reservoir 1 to the brake or the clutch.

Thereafter, the pressurizing sending device for the operation fluid is coupled to the fluid inlet port 3 of the reservoir 1, whereby the operation fluid is sent with pressure from the fluid inlet port 3 to the respective fluid pressure systems through the fluid storage chamber 5. The operation fluid sent with pressure to the fluid inlet port 3 causes surface tension at the mesh of the filter 13, so that the flowing of the operation fluid into the filter 13 is limited. However, since the air within the fluid storage chamber 5 at the lower side than the filter 13 enters into the fluid induction tube 2e through the vent port 14 of the fluid induction tube 2e and further is exhausted to the outside of the reservoir from the fluid inlet port 3, so that the flowing efficiency of the operation fluid is enhanced. Thus, the filling operation of the operation fluid can be performed satisfactorily in a shorter time period than the conventional technique.

Further, since the vent port 14 is disposed at a position higher than the upper limit level gauge 2f, the operation fluid supplied to the fluid induction tube 2e from the fluid inlet port 3 does not directly flow into the fluid storage chamber 5 from the vent port 14 but all of the operation fluid can be filtered by the filter 13.

The vent port in the invention may be disposed in a manner that at least the entirety of thereof is disposed at a position higher than the upper level gauge, and the distance therebetween is a mere matter of design choice. Further, although in the aforesaid embodiment, the upper limit level gauge is set between the filter and the vent port, both the filter and the vent port may be set at a position higher than the upper limit level gauge.

As described above, according to the reservoir for the fluid pressure master cylinder for a vehicle according to the invention, the filter is integrally molded with the reservoir main body thereby to intend to improve both the productivity and the economic efficiency. Further, at the time of sending with pressure and filling the operation fluid, since the air within the fluid storage chamber is exhausted to the outside of the reservoir from the vent port of the fluid induction tube, the flowing efficiency of the operation fluid which was conventionally interfered by the filter can be improved, and so the filling operation can be satisfactorily performed in a shorter time period than the conventional technique.

Furthermore, since the vent port is disposed at a position higher than the upper level gauge, the operation fluid supplied to the fluid induction tube from the fluid inlet port does not directly flow into the fluid storage chamber from the vent port but all of the operation fluid can be filtered by the filter like the conventional technique.

## Claims

1. A reservoir (1) in which a fluid inlet port (3) is provided at an upper portion (2n) of a reservoir main body (2) having a fluid storage chamber (5) therein, a fluid supply port is provided at a lower portion of the reservoir main body, and a filter (13) is integrally molded with an inner portion of the reservoir main body, **characterized in that**
a fluid induction tube (2e) is provided downward within the fluid storage chamber (5),
an upper opening (4) of the fluid induction tube constitutes the fluid inlet port,
the filter (13) is disposed at an inside of a lower portion of the fluid induction tube (2e),
a vent port (14) for communicating the fluid storage chamber (5) with an inner portion of the fluid induction tube (2e) is provided at a side wall of the fluid induction tube at a portion upper than the filter, and
the vent port (14) is disposed at a position higher than an upper limit level of a fluid surface.

2. A reservoir for a fluid pressure master cylinder for a vehicle as claimed in claim 1.

3. The reservoir for a fluid pressure master cylinder for a vehicle as claimed in claim 2, wherein the fluid supply port (7) communicates with the fluid pressure master cylinder.

4. The reservoir (1) for a fluid pressure master cylinder for a vehicle as claimed in claim 3, wherein a plurality of the fluid supply port (7a,7b,7c) are provided at the lower portion (2i) of the reservoir main body and the fluid pressure master cylinder has multi systems.

5. The reservoir (1) for a fluid pressure master cylinder for a vehicle as claimed in claim 3, wherein a plurality of the fluid supply port (7a, 7b, 7c) are provided at the lower portion (2i) of the reservoir main body to communicate with a plurality of the fluid pressure master cylinder.

## Patentansprüche

1. Behälter (1), in dem eine Fluideinlassöffnung (3) in einem oberen Abschnitt (2n) des Behälterhauptkörpers (2), der eine Fluidspeicherkammer (5) darin besitzt, vorgesehen ist, eine Fluidzufuhröffnung ist in einem unteren Abschnitt des Behälterhauptkörpers vorgesehen, und ein Filter (13) ist integral mit einem inneren Abschnitt des Behälterhauptkörpers gegossen, **dadurch gekennzeichnet, dass**
ein Fluideinführrohr nach unten innerhalb der Fluidspeicherkammer (5) vorgesehen ist,
eine obere Öffnung (4) des Fluideinführrohrs die Fluideinlassöffnung bildet,
der Filter (13) auf einer inneren Seite eines unteren Abschnitts des Fluideinführrohrs (2e) vorgesehen ist,
eine Belüftungsöffnung (14) zum Verbinden der Fluidspeicherkammer (5) mit einem inneren Abschnitt des Fluideinführrohrs (2e) ist in einer Seitenwand des Fluideinführrohrs in einem Abschnitt vorgesehen, der weiter oben ist als der Filter, und
die Belüftungsöffnung (14) ist in einer Position vorgesehen, die höher ist als ein oberes Grenzniveau einer Fluidoberfläche.

2. Behälter für einen Fluiddruck-Hauptzylinder für ein Fahrzeug nach Anspruch 1.

3. Behälter für einen Fluiddruck-Hauptzylinder für ein Fahrzeug nach Anspruch 2, bei welchem die Fluidzufuhröffnung (7) mit dem Fluiddruck-Hauptzylinder in Verbindung steht.

4. Behälter (1) für einen Fluiddruck-Hauptzylinder für ein Fahrzeug nach Anspruch 3, bei welchem eine Mehrzahl der Fluidzufuhröffnungen (7a, 7b, 7c) in dem unteren Abschnitt (2i) des Behälterhauptkörpers vorgesehen ist, und der Fluiddruck-Hauptzylinder besitzt mehrere Systeme.

5. Behälter (1) für einen Fluiddruck-Hauptzylinder für ein Fahrzeug nach Anspruch 3, bei welchem eine Mehrzahl der Fluidzufuhröffnungen (7a, 7b, 7c) in dem unteren Abschnitt (2i) des Behälterhauptkörpers vorgesehen ist, um mit einer Mehrzahl von Fluiddruck-Hauptzylindern in Verbindung zu stehen.

## Revendications

1. Réservoir (1) dans lequel un orifice (3) d'entrée de fluide est prévu à la partie supérieure (2n) du corps principal (2) du réservoir y comprenant une chambre (5) d'accumulation du fluide, un orifice d'alimentation en fluide est prévu à la partie inférieure du corps principal du réservoir, et un filtre (13) est intégralement moulé dans une partie inférieure du corps principal du réservoir; **caractérisé en ce que**
un tube (2e) d'admission du fluide est prévu dirigé vers le bas dans la chambre (5) d'accumulation du fluide,
l'ouverture (4) supérieure du tube d'admission du fluide constitue l'orifice d'entrée du fluide,
le filtre (13) est situé à l'intérieur de la partie inférieure du tube (2e) d'admission du fluide
un orifice (14) de ventilation pour faire communiquer la chambre (5) d'accumulation du fluide avec la partie intérieure du tube (2e) d'admission du fluide est prévu dans une paroi latérale du tube d'admission du fluide dans une partie plus élevée que le filtre, et
l'orifice (14) de ventilation est situé à une position plus haute que le niveau de la limite supérieure de la surface du fluide.

2. Réservoir pour un maître cylindre de pression de fluide pour un véhicule comme revendiqué à la revendication 1.

3. Réservoir pour un maître cylindre de pression de fluide pour un véhicule comme revendiqué à la revendication 2, dans lequel l'orifice (7) d'alimentation en fluide communique avec le maître cylindre de pression de fluide.

4. Réservoir (1) pour un maître cylindre de pression de fluide pour un véhicule comme revendiqué à la revendication 3, dans lequel une pluralité d'orifices (7a, 7b, 7c) d'alimentation en fluide sont prévus dans la partie inférieure (2i) du corps principal du réservoir et le maître cylindre de pression de fluide comprend plusieurs systèmes.

5. Réservoir (1) pour un maître cylindre de pression de fluide pour un véhicule comme revendiqué à la revendication 3, dans lequel une pluralité d'orifices (7a, 7b, 7c) d'alimentation en fluide sont prévus dans la partie inférieure (2i) du corps principal du réservoir pour communiquer avec une pluralité de maîtres cylindres de pression de fluide.
